# EUROPEAN PATENT SPECIFICATION

(11) **EP 4 136 962 B1**
(45) Date of publication and mention of the grant of the patent: **05.11.2025**
(21) Application number: 21191892.5
(22) Date of filing: 18.08.2021
(51) Int. Cl.: A01G 9/14, A01G 9/24, E04B 7/16, E04D 13/035, E06B 3/964, E06B 7/14

(54) **A GREENHOUSE**
EIN GEWÄCHSHAUS
UNE SERRE

(43) Date of publication of application: 22.02.2023
(73) Proprietor: Boal Systemen B.V., 2691 HC 's-Gravenzande (NL)
(72) Inventor: Heijkoop, Niels Jelle, 2761 VJ Zevenhuizen (NL)
(74) Representative: De Vries & Metman

(56) References cited:
- EP-A1- 2 027 351
- EP-B1- 0 719 373
- CN-A- 1 615 390
- DE-A1- 3 310 230
- FR-A1- 3 075 854
- US-A- 1 926 160

## Description

The present invention relates to a greenhouse including an inclined roof which is provided with a closable window, which has a frame including a transparent cover, which frame comprises a lower profile, an upper profile, a first side profile and a second side profile which are fixed to each other such that the first and second side profiles extend between the upper and lower profiles, wherein in a closed condition of the window the frame rests on a circumferential edge of the roof and the lower profile is located at a lower height level than the upper profile, wherein at least one of the lower profile and the first side profile has a gutter extending in its longitudinal direction for transporting water such as condensate from the interior of the greenhouse, wherein at least the lower profile and the first side profile are mounted to each other through a corner connector, which has a first portion which is fixed to the lower profile and a second portion which is fixed to the first side profile.

Such a greenhouse including a closable window is known. In the rectangular frame of the closable window of the known greenhouse the lower profile, the upper profile, the first side profile and the second side profile are fixed to each other through corner connectors. The first and second portions of each corner connector fit in respective chambers of two adjacent profiles. For example, the corner connector which connects the lower profile and the first side profile to each other has a first portion which fits inside the lower profile and is fixed to it and a second portion which fits inside the first side profile and is fixed to it. The circumferential edge of the roof on which the frame rests in the closed condition of the window surrounds an opening in the roof through which the interior communicates with the environment of the greenhouse in the open condition of the window so as to create ventilation. The lower profile of the frame of the closable window of the known greenhouse has a gutter for collecting and transporting water. The gutter extends in its longitudinal direction and is located such that when condensate on the transparent cover at the inner side of the greenhouse flows in downward direction to the lower profile the condensate is collected in the gutter. The gutter is provided with drain holes which are drilled in the lower profile in order to drain the condensate to the outer side of the frame. This requires an additional step in manufacturing and preparing the lower profile before assembling the frame. It is important to drain water from the gutter since this remaining water may lead to frost damage.

US 1,926,160 is related to a greenhouse, a sash therefor and comprising longitudinal sash bars, an angle iron upper rail connecting the bars, an angle iron lower rail connecting the bars, and glass panels supported by the bars, the bars having drip grooves therein leading to the lower rail, the lower rail having weep holes provided therein to permit water drained into the lower rail to flow therethrough, the bars having their lower ends cut away to provide a drain passage longitudinally of the lower rail.

WO 2007/123430 is related to a window frame which consists of longitudinal elements connected to form a frame. Along the whole inner circumference, or along the lower half of the inner circumference, the window frame is provided with flat faying surfaces, which are arranged on one plane, below the external, upper surface of the window frame. The faying surfaces of the window frame mate with the corresponding faying surfaces of the window leaf frame and the gasket located between them. In the bottom element of the window frame there are transversal through channels with an inlet opening arranged on the plane of the inner side wall and an outlet opening fitted with a throating, which protrudes out of the external side wall of the element. The outlet opening with the throating is located above the upper surface of the rafter, so that the drained water flows out on the initial roofing foil.

DE 33 10 230 is related to a window made of profiled sections and corner pieces connecting the latter wherein the corner pieces have base cuboids which adjoin the profiled sections, which are cut off in a blunt manner, in an essentially flush manner and which have important functional elements of the window, such as rollers and drainage openings, above all however groove recesses for receiving the glazing.

An object of the invention is to provide a greenhouse which can be manufactured efficiently.

This object is accomplished with the greenhouse according to the claim 1, wherein the corner connector has a core which is located between the first and second portions and between the lower profile and the first side profile and which is provided with a drain opening that communicates with the gutter and is located below the gutter in the closed condition of the window so as to drain water from the gutter.

An advantage of the greenhouse according to the invention is that the corner connector is multi-functional. It connects the lower profile and the first side profile to each other and can also drain water from the gutter at at least one of the lower profile and the first side profile.

The lower profile, the upper profile, the first side profile and the second side profile may be made of extruded aluminium. The transparent cover may be a glass pane.

It is noted that the gutter may collect and transport condensate or leakage water which enters the gutter from outside or inside the greenhouse, for example through openings between profiles or between profiles and other parts.

The drain opening may be located at a lower side of the core which is directed to the circumferential edge of the roof in the closed condition of the window.

In a particular embodiment at least one of the frame and the circumferential edge of the roof is provided with a seal strip which extends along the circumferential edge between the frame and the circumferential edge in the closed condition of the window, wherein the drain opening is located at a side of the seal strip which is directed away from the window. This means that in the closed condition of the window water from the gutter can be drained through the corner connector to a location outside the seal strip as seen from an opening that is surrounded by the circumferential edge. Consequently, the seal strip may form a substantially continuous seal strip along the circumferential edge. An appropriately sealed window is advantageous in order to achieve sustainable greenhouse cultivation, in which optimized climate conditions, such as temperature, humidity, CO₂ concentration and light, are combined with limited use of energy, since it is desired to minimize exchange of air between the interior of the greenhouse and its environment in such a sustainable greenhouse. The corner connector provides the opportunity to seal the window better than in conventional greenhouses, causing less air exchange between the interior of the greenhouse and the environment. The corner connector serves to drain water from the window in a controlled manner, whereas it prevents water to enter into the greenhouse through the drain opening. The collaboration of the corner connector and the seal strip prevent, at the same time, water from entering the greenhouse from outside via the window, for example due to raining-in under windy conditions. The seal strip may be formed by a separate part of flexible material, but it may also be part of the frame and/or the circumferential edge of the roof which closely fit to each other in the closed condition of the window.

Preferably, the lower profile has a supporting surface which supports the transparent cover and a gutter being a lower profile gutter which extends below the supporting surface and opens at a side which is directed to the upper profile so as to collect condensate from the transparent cover, wherein the core is provided with a drain opening being a lower profile drain opening that communicates with the lower profile gutter, since the lower profile gutter can collect condensate flowing downwardly from the transparent cover at a side thereof which is directed to the interior of the greenhouse. The collected condensate can flow through the lower profile gutter towards the corner connector. Hence, it is not necessary to drill holes in the lower profile for draining condensate.

The lower profile may have one or more additional lower profile gutters, wherein the lower profile drain opening comprises one or more lower profile drain openings in the core which communicate(s) with the additional lower profile gutters.

In another particular embodiment the first side profile has a gutter being a first side profile gutter, wherein the core is provided with a drain opening being a first side profile drain opening which communicates with the first side profile gutter. The first side profile gutter may collect and transport condensate or leakage water towards the corner connector, which water can be drained via the first side profile drain opening of the corner connector.

The lower profile drain opening and the first side profile drain opening may form a common drain opening.

In a particular embodiment at least one of the first portion and the second portion fits inside the lower profile and the first side profile, respectively. The first portion may fit inside the lower profile such that a rotation of the corner connector about a longitudinal axis of the lower profile as well as a displacement of the corner connector in transverse direction of the longitudinal axis of the lower profile is blocked. Similarly, the second portion may fit inside the first side profile such that a rotation of the corner connector about a longitudinal axis of the first side profile as well as a displacement of the corner connector in transverse direction of the longitudinal axis of the first side profile is blocked. This creates a rigid frame.

In an embodiment the at least one of the first portion and the second portion fits inside the lower profile and the first side profile, respectively, wherein a screw is screwed into the at least one of the first portion and the second portion through an outer wall of the lower profile and the first side profile, respectively, wherein the at least one of the first portion and the second portion abuts an inner side of the outer wall next to the screw. This prevents the corresponding outer wall from forming a dent below the screw when tightening the screw. For example, the at least one of the first portion and the second portion may have two extensions which fit in parallel hollow chambers of the lower profile and the first side profile, respectively, separated by an intermediate wall, wherein the screw passes along one of the extensions which abuts the outer wall and is screwed into the other extension through the intermediate wall. Hence, the screw passes the one of the extensions without being screwed into it, but it prevents the corresponding outer wall from forming a dent below the screw when tightening the screw.

The gutter may be formed by a hollow core of the at least one of the lower profile and the first side profile.

The corner connector may be a single unit which is made of aluminium, preferably made by means of moulding. Alternatively, it may be made of plastic or fibre-reinforced plastic.

In a particular embodiment the first side profile has a supporting surface which supports the transparent cover and the core has an upper surface portion which is adjacent to and flush with or just below the supporting surfaces of the lower profile and the first side profile, respectively. In the event that the upper surface portion is flush with the supporting surfaces of the lower profile and the first side profile it also supports the transparent cover; in the event that the upper surface portion is just below the supporting surfaces of the lower profile and the first side profile it is prevented from supporting the transparent cover in order to avoid local stress if the upper surface portion would slightly project above the supporting surfaces of the lower profile and the first side profile, in case of deviating production tolerance for example.

In a specific embodiment the lower profile and the first side profile are provided with a flexible lower profile clamping strip and a flexible first side profile clamping strip, respectively, which cover respective edge portions of the transparent cover, wherein the clamping strips are inclined upwardly with respect to the plane of the transparent cover in outward direction of the transparent cover, wherein the width of the lower profile clamping strip is such that it slightly overlaps the first side profile, wherein an end portion of the first side profile clamping strip overlaps a portion of the lower profile clamping strip, wherein the core is provided with an upwardly directed lug for upwardly bending a corner of the lower profile clamping strip where it is overlapped by the end portion of the first side profile clamping strip. This means that rain water from the first side profile clamping strip is guided onto the lower profile clamping strip, which minimizes the risk of leakage between the first side profile clamping strip and the lower profile clamping strip, whereas the size of an aperture between the first side profile clamping strip and the lower profile clamping strip due to the inclinations of the clamping strips is minimized. The overlap serves to avoid gaps between the clamping strips, for example in case of shrinking of the clamping strips.

The invention will hereafter be elucidated with reference to very schematic drawings showing an embodiment of the invention by way of an example.
Fig. 1 is a cross-sectional view of an embodiment of a part of a greenhouse according to the invention.
Fig. 2 is an enlarged top view of a closable window of the greenhouse as shown in Fig. 1.
Fig. 3 is an enlarged part of the closable window as shown in Fig. 1, which part is indicated by III in Fig. 2.
Fig. 4 is a perspective view of the part as shown in Fig. 3, as seen from above.
Fig. 5 is a similar view as Fig. 4, but showing the part of the closable window without clamping strips.
Fig. 6 is a similar view as Fig. 4, but showing the part of the closable window as seen from below.
Fig. 7 is a cross-sectional view along the line VII-VII in Fig. 4.
Fig. 8 is a cross-sectional view along the line VIII-VIII in Fig. 4.
Figs. 9-12 are perspective views of a corner connector located at the part of the closable window as shown in Figs. 3-6.
Fig. 13 is an illustrative view of mounting a first portion of the corner connector to a lower profile of the closable window.
Fig. 14 is a similar view as Fig. 13, but illustrating how a second portion of the corner connector is mounted to a first side profile of the closable window.
Fig. 15 is a similar view as Fig. 6, but also showing seal strips.

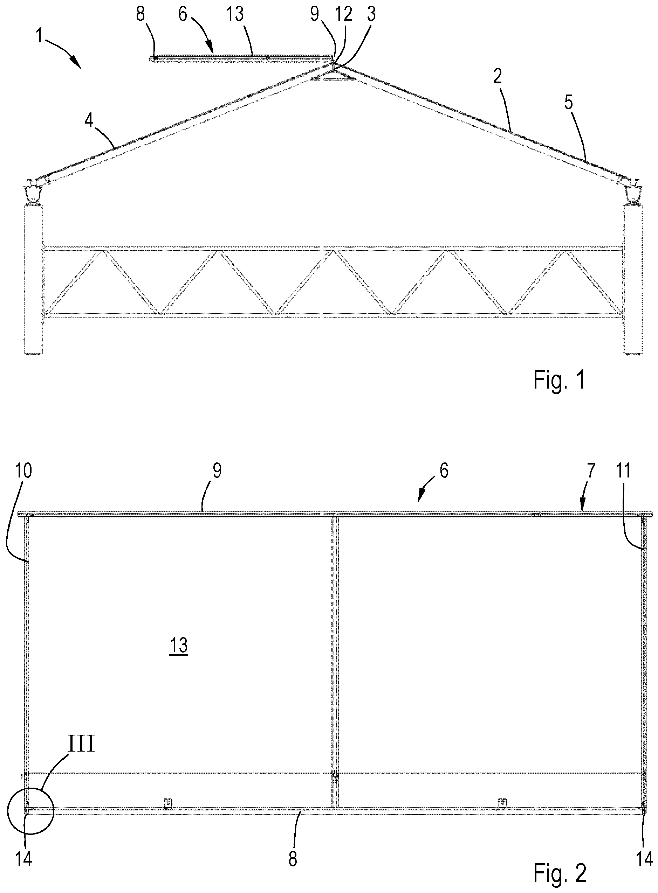

Fig. 1 shows an embodiment of a Venlo-type greenhouse 1, which has a roof 2 including two inclined roof sections at opposite sides of a ridge 3. The roof 2 is provided with rods 4 which are located at equal intervals along the ridge 3 and extend perpendicularly to the ridge 3. The rods 4 support glass panes 5. The ridge 3 and the rods 4 are preferably made of extruded aluminium.

In the embodiment as shown in Fig. 1 one of the inclined roof sections is provided with a closable window 6, which is shown separately in Fig. 2. The window 6 has a circumferential frame 7 including a lower profile 8, an upper profile 9, a first side profile 10 and a second side profile 11 which are fixed to each other. In the embodiment as shown in Fig. 2 the frame 7 is rectangular. Fig. 1 shows the window 6 in an open condition creating roof ventilation. In a closed condition of the window 6 the lower profile 8 is located at a lower height level than the upper profile 9. The first and second side profiles 10, 11 extend between the lower and upper profiles 8, 9. The upper profile 9 is mounted to the ridge 3 by hinges 12 in order to allow the window 6 to be opened or closed. The frame 7 supports a transparent cover in the form of a glass pane 13.

In a closed condition of the window 6 the frame 7 rests on a circumferential edge of the roof 2, which circumferential edge surrounds an opening which opens the interior of the greenhouse 1 to the environment when the window 6 is in the open condition. The circumferential edge may be formed by parts of the rods 4, the ridge 3 and a beam on which the lower profile 8 rests in the closed condition of the window 6.

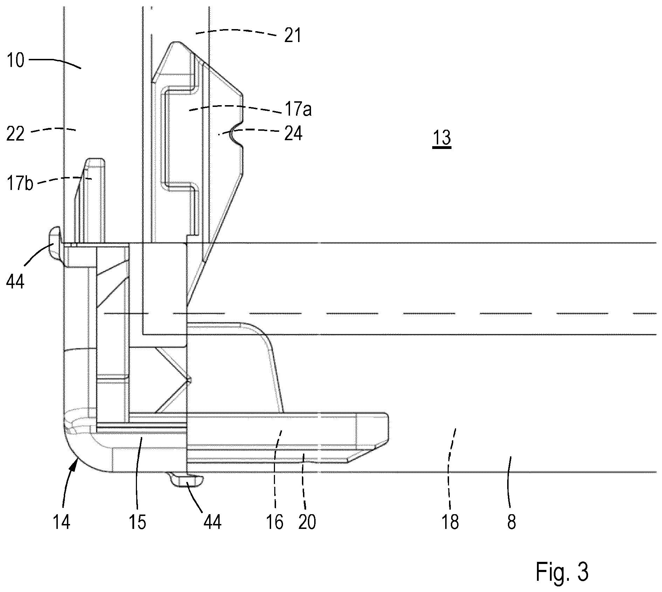

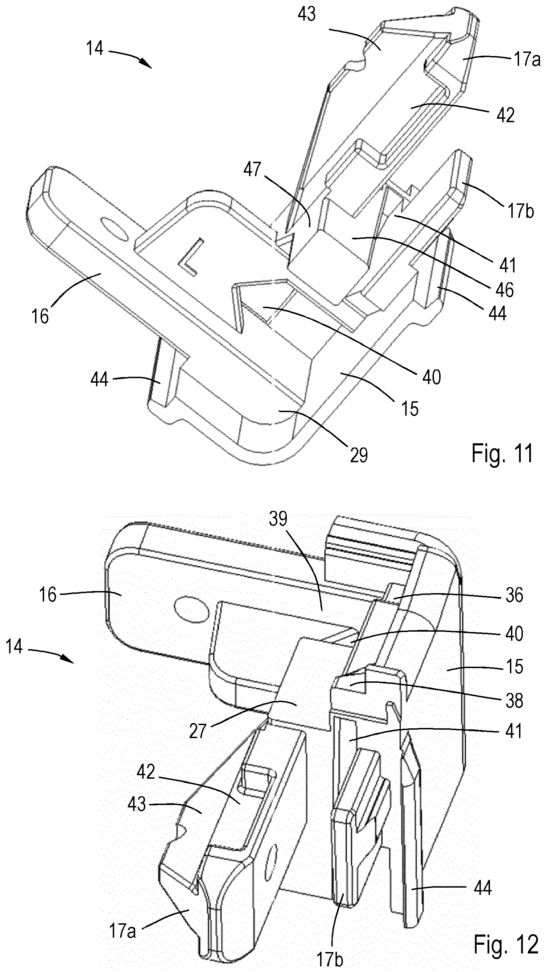

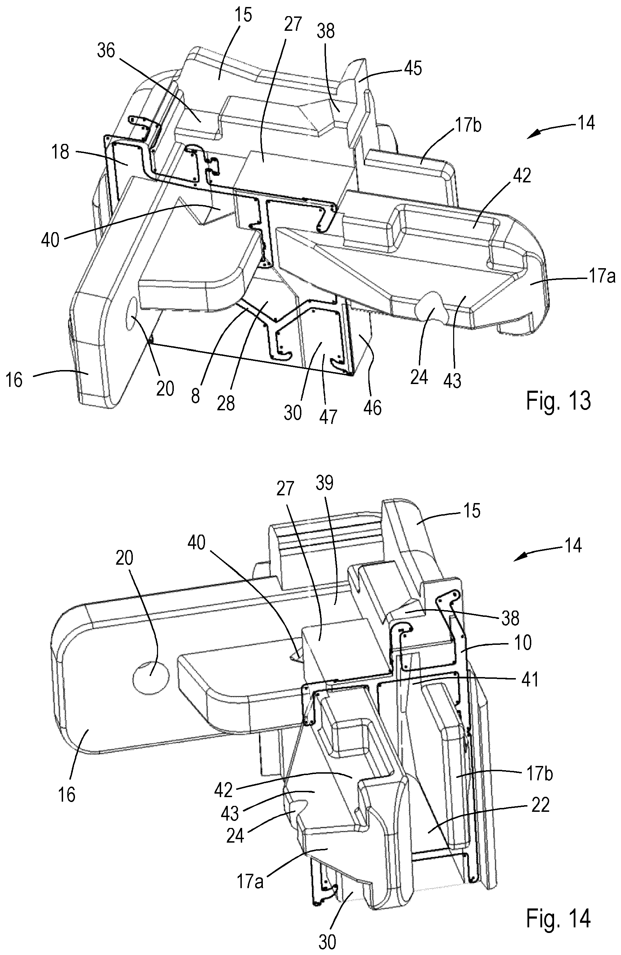

The lower profile 8 is fixed to the first side profile 10 and the second side profile 11 through respective corner connectors 14. The two corner connectors 14 as indicated in Fig. 2 are similar, but mirrored with respect to a plane which extends perpendicularly to the longitudinal direction of the lower profile 8. Figs. 3-14 show the corner connector 14 between the lower profile 8 and the first side profile 10 in more detail. This corner connector 14 will be described below, but it is noted that the other corner connector 14, i.e. the corner connector 14 which connects the lower profile 8 and the second side profile 11 to each other, has similar characteristics.

The corner connector 14 has a core 15, a first portion 16 which projects from the core 15 and a second portion that comprises an inner extension 17a and an outer extension 17b which are parallel to each other and project from the core 15. The directions in which the first portion 16 and the second portion 17a, 17b are directed are perpendicular to each other. The core 15 is located between the first and second portions 16, 17a, 17b and between the lower profile 8 and the first side profile 10.

The first portion 16 fits inside a hollow core 18 of the lower profile 8 and is fixed to the lower profile 8 through a screw 19, which passes through a through-hole in an outer wall of the lower profile 8 and is screwed into a corresponding hole 20 in the first portion 16. The inner extension 17a of the second portion partly fits inside a channel 21 of the first side profile 10 and the outer extension 17b fits inside a hollow core 22 of the first side profile 10. The second portion 17a, 17b is fixed to the first side profile 10 through a screw 23, which passes through a through-hole in an outer wall of the first side profile 10 and a through-hole in an intermediate wall between the channel 21 and the hollow core 22 and is screwed into a corresponding hole 24 in the inner extension 17a of the second portion. The first portion 16 fits inside the lower profile 8 such that a rotation of the corner connector 14 about a longitudinal axis of the lower profile 8 as well as a displacement of the corner connector 14 in transverse direction of the longitudinal axis of the lower profile 8 is blocked. Similarly, the second portion 17a, 17b fits inside the first side profile 10 such that a rotation of the corner connector 14 about a longitudinal axis of the first side profile 10 as well as a displacement of the corner connector 14 in transverse direction of the longitudinal axis of the first side profile 10 is blocked. It is noted that the screws 19, 23 may be selftapping screws such that no through-holes need to be prepared in the lower profile 8, the first side profile 10 and/or the corner connector 14.

The inner extension 17a extends beyond the outer extension 17b as seen from the core 15 such that the screw 23 passes along the outer extension 17b. In order to avoid a dent in the outer wall of the first side profile 10 below the screw 23 when tightening the screw 23 the outer extension 17b abuts the inner side of the outer wall next to the screw 23 such that it exerts a counter force onto the outer wall in case it tends to form a dent. Similarly, the first portion 16 abuts an inner side of an outer wall of the lower profile 8 around the screw 19 such that it exerts a counter force onto the outer wall in case it tends to form a dent upon tightening the screw 19.

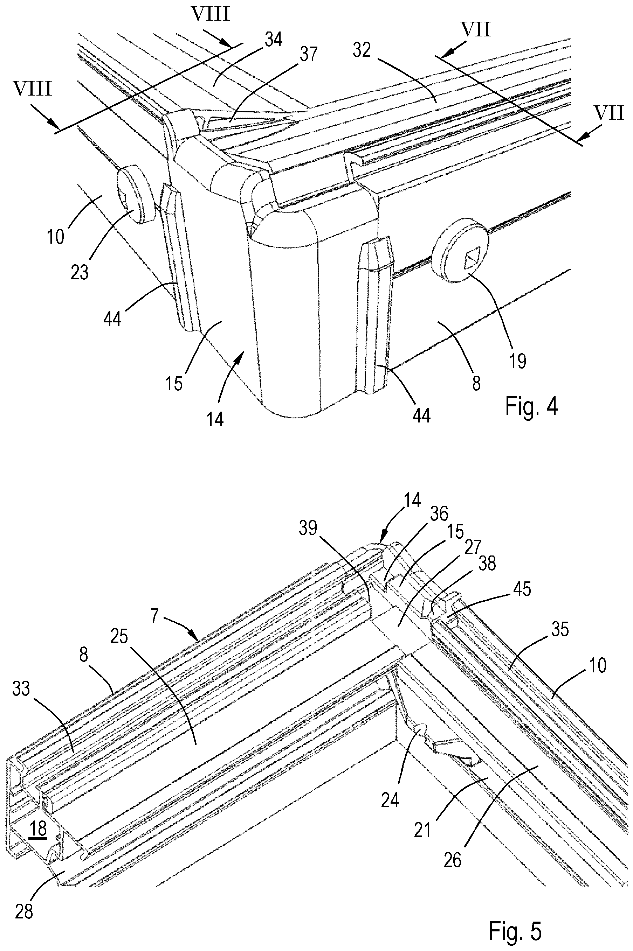

Fig. 5 shows a part of the frame 7 without the glass pane 13. The lower profile 8, the upper profile 9, the first side profile 10 and the second side profile 11 have respective supporting surfaces for supporting the glass pane 13; the supporting surfaces 25, 26 of the lower profile 8 and the first side profile 10 are shown in Fig. 5, respectively. The core 15 is provided with an upper surface portion 27, which is flush with or just below the supporting surfaces 25, 26 of the lower profile 8 and the first side profile 10, respectively. If it is flush with the supporting surfaces 25, 26 of the lower profile 8 and the first side profile 10 it may also support the glass pane 13.

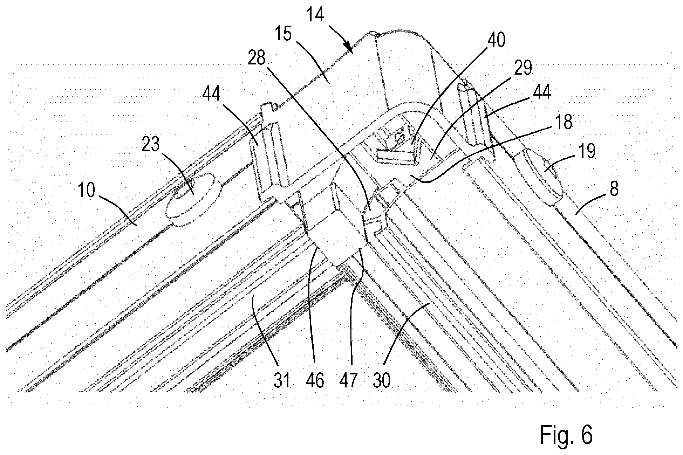

The lower profile 8 is provided with a lower profile gutter 28 which extends in its longitudinal direction. The lower profile gutter 28 extends below the supporting surface 25 of the lower profile 8 and opens at a side which is directed to the upper profile 9. In this case the lower profile gutter 28 is formed by an undercut. When condensate is formed on an inner side of the glass pane 13 which is directed to the interior of the greenhouse 1 and flows downwardly along the glass pane 13 in the closed condition of the window 6 the condensate flows into the lower profile gutter 28 where it is collected. Subsequently, the condensate can flow through the lower profile gutter 28 towards the corner connector 14. The core 15 of the corner connector 14 is provided with a drain opening 29 at a lower side thereof which is directed to the circumferential edge of the roof 2 in the closed condition of the window 6, see Figs. 6-8. The drain opening 29 communicates with the lower profile gutter 28, see Fig. 6. The drain opening 29 is located below the lower profile gutter 28 in the closed condition of the window 6 such that the condensate can flow from the lower profile gutter 28 through the drain opening 29 to the circumferential edge of the roof 2 such that it can flow further downwardly on the upper side of the roof 2 below the window 6.

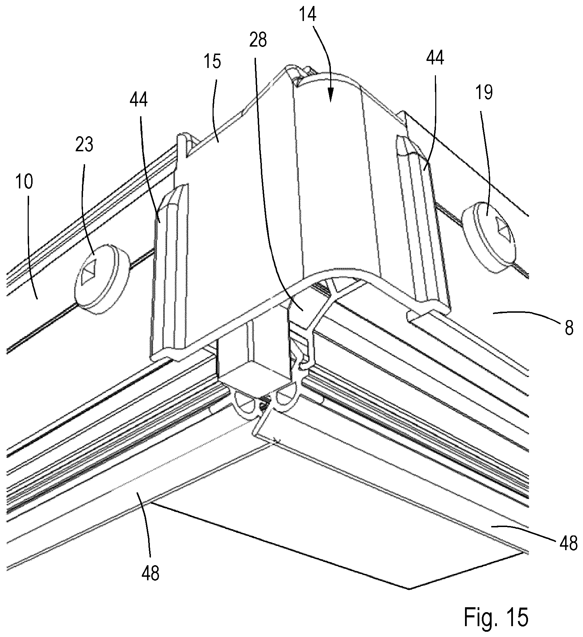

Fig. 6 shows seal strip receiving grooves 30, 31 in the lower profile 8 and the first side profile 10, respectively, which accommodate flexible seal strips 48, as shown in Fig. 15. The flexible seal strips 48 may be made of rubber, for example. The second side profile 11 has a similar seal strip receiving groove as the lower profile 8 and the first side profile 10 for accommodating a flexible seal strip 48, as well. In this case, the upper profile 9 does not have a seal strip receiving groove for receiving a flexible seal strip 48 like the lower profile 8 and the first and second side profiles 10, 11, since the upper profile 9 directly contacts the ridge 3 in the closed condition of the window 6. The flexible seal strips 48 at the lower profile 8 and the first and second side profiles 10, 11 together with the direct contact between the upper profile 9 and the ridge 3 provide a common seal strip which extends substantially continuously along the circumferential edge between the frame 7 and the circumferential edge in the closed condition of the window 6. Fig. 6 illustrates that the drain opening 29 is located at a side of the common seal strip which is directed away from the window 6. Hence, the condensate can leave the greenhouse 1 via the corner connector 14 by means of bypassing the common seal strip in the closed condition of the window 6. Because of the location of the drain opening 29 and the presence of the flexible seal strips 48 water can leave the greenhouse 1 easily via the corner connector 14 of the window 6, but hardly or not enter the interior of the greenhouse 1 from outside via the window 6. It is noted that in practice the greenhouse 1 may be installed with a slight slope in its longitudinal direction such that the lower profile gutter 28 has a slight inclination, as well. This means that most of the condensate will be drained through one of the two corner connectors 14 of a window 6 which is located at the lowest height level. Furthermore, in an alternative embodiment the upper profile 9 may also be provided with a flexible seal strip.

The glass pane 13 of the window 6 is covered at its circumference by flexible clamping strips, which may be made of plastic. Fig. 4 shows a lower profile clamping strip 32 of which a fixing portion is mounted in a lower profile clamping strip channel 33 of the lower profile 8 and of which a covering portion covers the glass pane 13, and a first side profile clamping strip 34 of which a fixing portion is mounted in a first side profile clamping strip channel 35 of the first side profile 10 and of which a covering portion covers the glass pane 13. Fig. 5 shows the lower profile clamping strip channel 33 and the first side profile clamping strip channel 35. Fig. 5 also shows that the core 15 of the corner connector 14 is provided with a clamping strip recess 36 which is aligned with the lower profile clamping strip channel 33 so as to receive the fixing portion of the lower profile clamping strip 32, as well. The first side profile clamping strip 34 extends up to the core 15.

The covering portions of the lower profile clamping strip 32 and the first side profile clamping strip 34, respectively, are inclined upwardly with respect to the plane of the glass pane 13 in outward direction of the glass pane 13, see Fig. 4. The width of the lower profile clamping strip 32 is such that its covering portion slightly overlaps the first side profile 10. As a consequence, an end portion of the first side profile clamping strip 34 overlaps a portion of the covering portion of the lower profile clamping strip 32, see Fig. 4. This means that rain water from the first side profile clamping strip 34 is guided onto the lower profile clamping strip 32. This minimizes the risk of leakage between the first side profile clamping strip 34 and the lower profile clamping strip 32.

In order to minimize the size of an aperture 37 between the first side profile clamping strip 34 and the lower profile clamping strip 32, as indicated in Fig. 4, a corner of the lower profile clamping strip 32 is bent upwardly by the corner connector 14 through an upwardly directed lug 38 at the core 15.

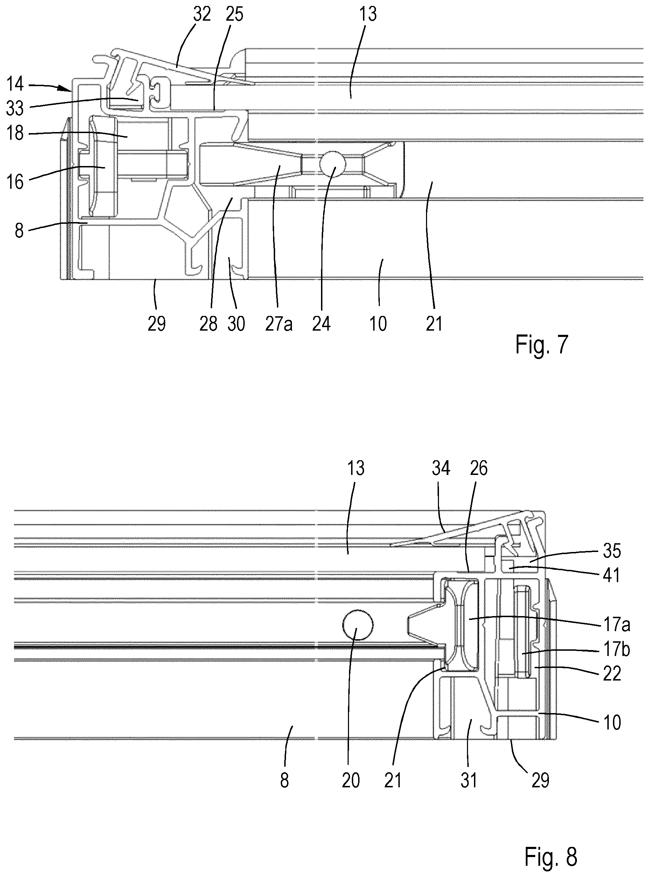

The supporting surface 25 is provided with a shallow depression along the lower profile 8, see Fig. 7. The depression and the lower profile clamping strip channel 33 of the lower profile 8 also communicate with the drain opening 29 through a hole 39 in an upper side of the core 15 of the corner connector 14 and a passage 40 therein. The hole 39 is next to the upper surface portion 27 of the core 15, see Fig. 5. Hence, the depression of the supporting surface 25 and the lower profile clamping strip channel 33 of the lower profile 8 also form gutters, which can discharge condensate or leakage water. Similarly, the hollow core 18 in the lower profile 8 communicates with the drain opening 29 through the core 15 such that the hollow core 18 functions as a gutter, as well, see Fig. 6.

The first side profile 10 also comprises first side profile gutters for discharging condensate or leakage water, which are formed by the first side profile clamping strip channel 35 and the hollow core 22, in this case. The first side profile clamping strip channel 35 and the hollow core 22 communicate with the drain opening 29 through an upwardly directed groove 41 in the core 15 of the corner connector 14, see Figs. 8, 9, 12 and 14, for example. The supporting surface 26 of the first side profile 10 is provided with a shallow depression along the first side profile 10, see Fig. 8. The depression also communicates with the drain opening 29 through the hole 39 in the upper side of the core 15 of the corner connector 14 and the passage 40 therein. Another first side profile gutter might be formed by channel 21 of the first side profile 10; however in this case the channel 21 does not communicate with the drain opening 29, but water that is collected in the channel 21 can evaporate in the interior of the greenhouse 1.

The drain opening 29 forms a common drain opening which communicates with the lower profile gutter 28, the hollow core 18 of the lower profile 8, the first side profile clamping strip channel 35, the hollow core 22 of the first side profile 10, the depressions of the supporting surfaces 25, 26 and the lower profile clamping strip channel 33, but they may also have their own separate drain openings.

The corner connector 14 may be a single unit which is made of aluminium, preferable made by means of moulding. It can also be made of plastic, but this is less preferred because of its limited durability and strongness.

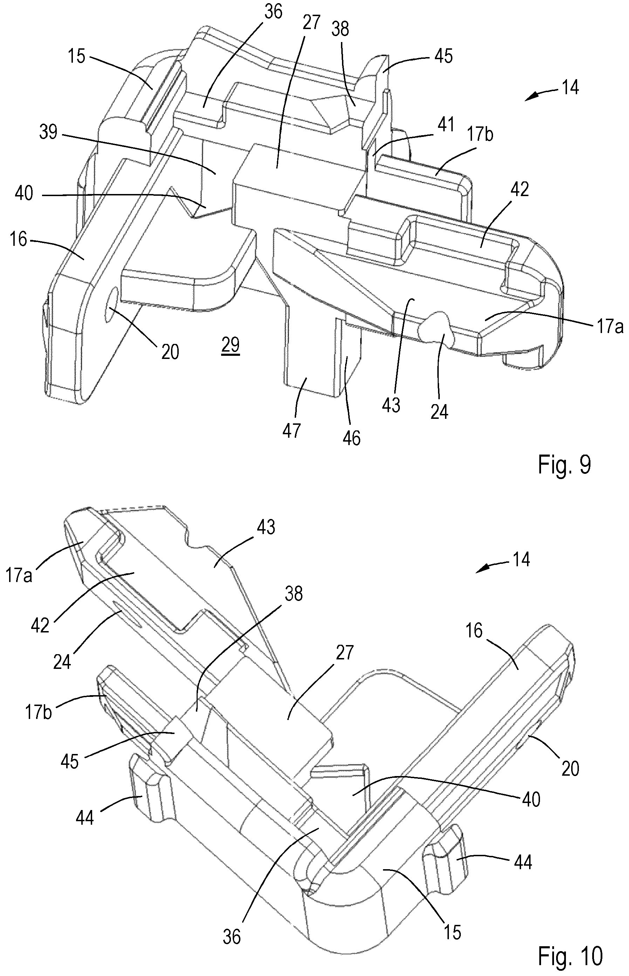

Figs. 9-14 show that the inner extension 17a of the first portion of the corner connector 14 is provided with two rivet recesses 42 at opposite sides of a lateral protrusion 43. The lateral protrusion 43 provides a rigid connection within the channel 21 of the first side profile 10 and also hides the screw 23 such that it is invisible from the interior of the greenhouse 1. Besides, it minimizes the risk that anything will hook behind the screw 23, which improves the installation environment. The rivet recesses 42 may be used for receiving riveted edges of the channel 21 of the first side profile 10 in the event that the corner connector 14 is fixed to the first side profile 10 by riveting in addition of or instead of the screw 23.

The core 15 is further provided with covering protrusions 44 for covering transitions between the lower profile 8 and the core 15 and between the first side profile 10 and the core 15.

Furthermore, the first side profile clamping strip 34 is prevented from moving downwardly by means of an abutment 45 at the core 15, see Figs. 9 and 10. The core 15 is provided with a first stop 46 to which the flexible seal strip 48 in the seal strip receiving groove 31 abuts and a second stop 47 to which the flexible seal strip 48 in the seal strip receiving groove 30 abuts, see Figs. 6 and 15.

Considering the corner connector 14 itself, it can be defined as having the first portion 16 that is configured to be fixed to the lower profile 8, the second portion 17a, 17b that is configured to be fixed to the first side profile 10 and a core 15 which is located between the first and second portions 16, 17a, 17b, wherein the core 15 is provided with a gutter opening at a side where at least one of the first portion 16 and the second portion 17a, 17b is located so as to communicate with at least one of the gutters 18, 22, 25, 26, 28, 33, 35 of the lower profile 8 and the first side profile 10 when the corner connector 14 is mounted to the lower profile 8 and the first side profile 10, wherein the drain opening 29 of the core 15 communicates with the gutter opening and is located at a different side of the core 15 than the sides where the first portion 16 and the second portion 17a, 17b are located. The upwardly directed groove 41 in the core 15 is a clearly visible example of such a gutter opening that communicates with the drain opening 29, see Fig. 9, for example.

In fact, the first portion 16 and the second portion 17a, 17b project from the core 15 in directions which are perpendicular with respect to each other, such that they span a corner connector plane. In the embodiment as shown in the figures the drain opening 29 lies at a side of the core 15 which is parallel to the corner connector plane. In other words, the drain opening 29 lies at a side of the core 15 which is perpendicular to the sides from which the first portion 16 and the second portion 17a, 17b project, respectively.

The invention is not limited to the embodiments shown in the drawings and described hereinbefore, which may be varied in different manners within the scope of the claims and their technical equivalents. For example, the first and second portions of the corner connector and the lower profile and the first side profile may have different shapes.

## Claims

1. A greenhouse (1) including an inclined roof (2) which is provided with a closable window (6), which has a frame (7) including a transparent cover (13), which frame (7) comprises a lower profile (8), an upper profile (9), a first side profile (10) and a second side profile (11) which are fixed to each other such that the first and second side profiles (10, 11) extend between the upper and lower profiles (8, 9), wherein in a closed condition of the window (6) the frame (7) rests on a circumferential edge of the roof (2) and the lower profile (8) is located at a lower height level than the upper profile (9), wherein at least one of the lower profile (8) and the first side profile (10) has a gutter (18, 22, 25, 26, 28, 33, 35) extending in its longitudinal direction for transporting water such as condensate from the interior of the greenhouse (1), wherein at least the lower profile (8) and the first side profile (9) are mounted to each other through a corner connector (14), which has a first portion (16) which is fixed to the lower profile (8) and a second portion (17a, 17b) which is fixed to the first side profile (10), wherein the corner connector (14) has a core (15) which is located between the first and second portions (16, 17a, 17b) and between the lower profile (8) and the first side profile (10) and which is provided with a drain opening (29) that communicates with the gutter (18, 22, 25, 26, 28, 33, 35) and is located below the gutter (18, 22, 25, 26, 28, 33, 35) in the closed condition of the window (6) so as to drain water from the gutter (18, 22, 25, 26, 28, 33, 35).

2. A greenhouse (1) according to claim 1, wherein the drain opening (29) is located at a lower side of the core (15) which is directed to the circumferential edge of the roof (2) in the closed condition of the window (6).

3. A greenhouse (1) according to claim 1 or 2, wherein at least one of the frame (7) and the circumferential edge of the roof (2) is provided with a seal strip (48) which extends along the circumferential edge between the frame (7) and the circumferential edge in the closed condition of the window (6), wherein the drain opening (29) is located at a side of the seal strip (48) which is directed away from the window (6).

4. A greenhouse (1) according to any one of the preceding claims, wherein the lower profile (8) has a supporting surface (25) which supports the transparent cover (13) and a gutter being a lower profile gutter (28) which extends below the supporting surface (25) and opens at a side which is directed to the upper profile (9) so as to collect condensate from the transparent cover (13), wherein the core (15) is provided with a drain opening being a lower profile drain opening (29) that communicates with the lower profile gutter (28).

5. A greenhouse (1) according to claim 4, wherein the lower profile (9) has one or more additional lower profile gutters (18, 25, 33), wherein the lower profile drain opening comprises one or more lower profile drain openings (29) in the core which communicate(s) with the additional lower profile gutters (18, 25, 33).

6. A greenhouse (1) according to any one of the preceding claims, wherein the first side profile (10) has a gutter being a first side profile gutter (22, 26, 35) wherein the core (15) is provided with a drain opening being a first side profile drain opening (29) which communicates with the first side profile gutter (22, 26, 35).

7. A greenhouse (1) according to claim 6 and claims 4 or 5, wherein the lower profile drain opening(s) and the first side profile drain opening form a common drain opening (29).

8. A greenhouse (1) according to any one of the preceding claims, wherein at least one of the first portion (16) and the second portion (17a, 17b) fits inside the lower profile (8) and the first side profile (10), respectively.

9. A greenhouse (1) according to any one of the preceding claims, wherein the gutter is formed by a hollow core (18, 22) of the at least one of the lower profile (8) and the first side profile (10).

10. A greenhouse (1) according to any of the preceding claims, wherein the corner connector (14) is a single unit which is made of aluminium, preferable made by means of moulding.

11. A greenhouse (1) according to any of the preceding claims and claim 4, wherein the first side profile (10) has a supporting surface (25) which supports the transparent cover (13) and the core (15) has an upper surface portion (27) which is adjacent to and flush with or just below the supporting surfaces (25, 26) of the lower profile (8) and the first side profile (10), respectively.

12. A greenhouse (1) according to any of the preceding claims, wherein the lower profile (8) and the first side profile (10) are provided with a flexible lower profile clamping strip (32) and a flexible first side profile clamping strip (34), respectively, which cover respective edge portions of the transparent cover (13), wherein the clamping strips (32, 34) are inclined upwardly with respect to the plane of the transparent cover (13) in outward direction of the transparent cover (13), wherein the width of the lower profile clamping strip (32) is such that it slightly overlaps the first side profile (10), wherein an end portion of the first side profile clamping strip (34) overlaps a portion of the lower profile clamping strip (32), wherein the core (15) is provided with an upwardly directed lug (38) for upwardly bending a corner of the lower profile clamping strip (32) where it is overlapped by the end portion of the first side profile clamping strip (34).

## Patentansprüche

1. Gewächshaus (1) mit einem geneigten Dach (2), das mit einem verschließbaren Fenster (6) versehen ist, das einen Rahmen (7) mit einer transparenten Abdeckung (13) aufweist, welcher Rahmen (7) ein unteres Profil (8), ein oberes Profil (9), ein erstes Seitenprofil (10) und ein zweites Seitenprofil (11) aufweist, die so aneinander befestigt sind, dass das erste und das zweite Seitenprofil (10, 11) sich zwischen dem oberen und dem unteren Profil (8, 9) erstrecken, wobei in einem geschlossen-Zustand des Fensters (6) der Rahmen (7) an einem Umfangsrand des Daches (2) anliegt und das untere Profil (8) auf einem niedrigeren Höhelevel liegt als das obere Profil (9), wobei mindestens eines von dem unteren Profil (8) und dem ersten Seitenprofil (10) eine sich in seiner Längsrichtung erstreckende Rinne (18, 22, 25, 26, 28, 33, 35) hat zum Transportieren von Wasser, wie beispielsweise Kondensat, aus dem Innenraum des Gewächshauses (1), wobei zumindest das untere Profil (8) und das erste Seitenprofil (9) über einen Eckverbinder (14) aneinander angebracht sind, der einen ersten Abschnitt (16), der am unteren Profil (8) befestigt ist, und einen zweiten Abschnitt (17a, 17b) aufweist, der am ersten Seitenprofil (10) befestigt ist, wobei der Eckverbinder (14) einen Kern (15) aufweist, der zwischen dem ersten und dem zweiten Abschnitt (16, 17a, 17b) und zwischen dem unteren Profil (8) und dem ersten Seitenprofil (10) angeordnet ist und der mit einer Ablauföffnung (29) versehen ist, die mit der Rinne (18, 22, 25, 26, 28, 33, 35) in Verbindung steht und die im geschlossen-Zustand des Fensters (6) unterhalb der Rinne (18, 22, 25, 26, 28, 33, 35) angeordnet ist, um Wasser aus der Rinne (18, 22, 25, 26, 28, 33, 35) ablaufen zu lassen.

2. Gewächshaus (1) gemäß Anspruch 1, wobei die Ablauföffnung (29) an einer Unterseite des Kerns (15) angeordnet ist, welche im geschlossen-Zustand des Fensters (6) zum Umfangsrand des Daches (2) hin gewandt ist.

3. Gewächshaus (1) gemäß Anspruch 1 oder 2, wobei mindestens einer von dem Rahmen (7) und dem Umfangsrand des Daches (2) mit einer Dichtleiste (48) versehen ist, die sich im geschlossen-Zustand des Fensters (6) entlang des Umfangsrandes zwischen dem Rahmen (7) und dem Umfangsrand erstreckt, wobei die Ablauföffnung (29) an einer Seite der Dichtleiste (48) angeordnet ist, die vom Fenster (6) weggewandt ist.

4. Gewächshaus (1) gemäß irgendeinem der vorstehenden Ansprüche, wobei das untere Profil (8) eine Stützfläche (25), die die transparente Abdeckung (13) stützt, und eine Rinne hat, die eine unteres-Profil-Rinne (28) ist, die sich unterhalb der Stützfläche (25) erstreckt und an einer Seite ausmündet, die zum oberen Profil (9) hin gewandt ist, um Kondensat von der transparenten Abdeckung (13) aufzufangen, wobei der Kern (15) mit einer Ablauföffnung versehen ist, die eine unteres-Profil-Ablauföffnung (29) ist, die mit der unteres-Profil-Rinne (28) in Verbindung steht.

5. Gewächshaus (1) gemäß Anspruch 4, wobei das untere Profil (9) eine oder mehrere zusätzliche unteres-Profil-Rinnen (18, 25, 33) aufweist, wobei die unteres-Profil-Ablauföffnung eine oder mehrere unteres-Profil-Ablauföffnungen (29) in dem Kern aufweist, die mit den zusätzlichen unteres-Profil-Rinnen (18, 25, 33) in Verbindung steht/stehen.

6. Gewächshaus (1) gemäß irgendeinem der vorstehenden Ansprüche, wobei das erste Seitenprofil (10) eine Rinne aufweist, die eine erstes-Seitenprofil-Rinne (22, 26, 35) ist, wobei der Kern (15) mit einer Ablauföffnung versehen ist, die eine erstes-Seitenprofil-Ablauföffnung (29) ist, die mit der erstes-Seitenprofil-Rinne (22, 26, 35) in Verbindung steht.

7. Gewächshaus (1) gemäß Anspruch 6 und Ansprüchen 4 oder 5, wobei die unteres-Profil-Ablauföffnung(en) und die erstes-Seitenprofil-Ablauföffnung eine gemeinsame Ablauföffnung (29) bilden.

8. Gewächshaus (1) gemäß irgendeinem der vorstehenden Ansprüche, wobei mindestens einer von dem ersten Abschnitt (16) und dem zweiten Abschnitt (17a, 17b) zugeordnet in das untere Profil (8) und das erste Seitenprofil (10) passt.

9. Gewächshaus (1) gemäß irgendeinem der vorstehenden Ansprüche, wobei die Rinne durch einen hohlen Kern (18, 22) von dem mindestens einen von dem unteren Profil (8) und dem ersten Seitenprofil (10) gebildet ist.

10. Gewächshaus (1) gemäß irgendeinem der vorstehenden Ansprüche, wobei der Eckverbinder (14) eine Einzel-Einheit ist, die aus Aluminium, vorzugsweise durch Gießen, hergestellt ist.

11. Gewächshaus (1) gemäß irgendeinem der vorstehenden Ansprüche und gemäß Anspruch 4, wobei das erste Seitenprofil (10) eine Stützfläche (25) aufweist, die die transparente Abdeckung (13) stützt, und der Kern (15) einen oberen Flächenabschnitt (27) aufweist, der zu den Stützflächen (25, 26) des unteren Profils (8) bzw. des ersten Seitenprofils (10) benachbart ist und bündig mit diesen abschließt oder knapp darunter liegt.

12. Gewächshaus (1) gemäß irgendeinem der vorstehenden Ansprüche, wobei das untere Profil (8) und das erste Seitenprofil (10) zugeordnet mit einer flexiblen unteres-Profil-Klemmleiste (32) und einer flexiblen erstes-Seitenprofil-Klemmleiste (34) versehen sind, die jeweilige Randabschnitte der transparenten Abdeckung (13) abdecken, wobei die Klemmleisten (32, 34) in Bezug auf die Ebene der transparenten Abdeckung (13) in Richtung nach außen der transparenten Abdeckung (13) nach oben geneigt sind, wobei die Breite der unteres-Profil-Klemmleiste (32) derart ist, dass sie das erste Seitenprofil (10) leicht überlappt, wobei ein Endabschnitt der erstes-Seitenprofil-Klemmleiste (34) einen Abschnitt der unteres-Profil-Klemmleiste (32) überlappt, wobei der Kern (15) mit einem nach oben gewandten Ansatz (38) versehen ist, um eine Ecke der unteres-Profil-Klemmleiste (32) nach oben zu biegen, wo sie von dem Endabschnitt der erstes-Seitenprofil-Klemmleiste (34) überlappt wird.

## Revendications

1. Serre (1) comportant un toit incliné (2) qui est pourvu d'une fenêtre refermable (6), qui présente un cadre (7) comportant un couvercle transparent (13), lequel cadre (7) comprend un profilé inférieur (8), un profilé supérieur (9), un premier profilé latéral (10) et un second profilé latéral (11) qui sont fixés l'un à l'autre de sorte que les premier et second profilés latéraux (10, 11) s'étendent entre les profilés supérieur et inférieur (8, 9), dans laquelle dans un état fermé de la fenêtre (6) le cadre (7) repose sur un bord circonférentiel du toit (2) et le profilé inférieur (8) est situé à un niveau de hauteur inférieur au profilé supérieur (9), dans laquelle au moins l'un parmi le profilé inférieur (8) et le premier profilé latéral (10) présente une gouttière (18, 22, 25, 26, 28, 33, 35) s'étendant dans sa direction longitudinale pour transporter de l'eau telle que du condensat depuis l'intérieur de la serre (1), dans laquelle au moins le profilé inférieur (8) et le premier profilé latéral (9) sont montés l'un à l'autre à travers un raccord d'angle (14), qui présente une première partie (16) qui est fixée au profilé inférieur (8) et une seconde partie (17a, 17b) qui est fixée au premier profilé latéral (10),
dans laquelle le raccord d'angle (14) présente un noyau (15) qui est situé entre les première et seconde parties (16, 17a, 17b) et entre le profilé inférieur (8) et le premier profilé latéral (10) et qui est pourvu d'une ouverture d'évacuation (29) qui communique avec la gouttière (18, 22, 25, 26, 28, 33, 35) et est situé sous la gouttière (18, 22, 25, 26, 28, 33, 35) à l'état fermé de la fenêtre (6) de manière à évacuer l'eau de la gouttière (18, 22, 25, 26, 28, 33, 35).

2. Serre (1) selon la revendication 1, dans laquelle l'ouverture d'évacuation (29) est située sur un côté inférieur du noyau (15) qui est dirigé vers le bord circonférentiel du toit (2) à l'état fermé de la fenêtre (6).

3. Serre (1) selon la revendication 1 ou 2, dans laquelle au moins l'un parmi le cadre (7) et le bord circonférentiel du toit (2) est pourvu d'une bande d'étanchéité (48) qui s'étend le long du bord circonférentiel entre le cadre (7) et le bord circonférentiel à l'état fermé de la fenêtre (6), dans laquelle l'ouverture d'évacuation (29) est située sur un côté de la bande d'étanchéité (48) qui est dirigée à l'opposé de la fenêtre (6).

4. Serre (1) selon l'une quelconque des revendications précédentes, dans laquelle le profilé inférieur (8) présente une surface de support (25) qui supporte le couvercle transparent (13) et une gouttière étant une gouttière profilée inférieure (28) qui s'étend sous la surface de support (25) et s'ouvre sur un côté qui est dirigé vers le profilé supérieur (9) de manière à collecter le condensat du couvercle transparent (13), dans laquelle le noyau (15) est pourvu d'une ouverture d'évacuation étant une ouverture d'évacuation profilée inférieure (29) qui communique avec la gouttière profilée inférieure (28).

5. Serre (1) selon la revendication 4, dans laquelle le profilé inférieur (9) présente une ou plusieurs gouttières profilées inférieures supplémentaires (18, 25, 33), dans laquelle l'ouverture d'évacuation profilée inférieure comprend une ou plusieurs ouvertures d'évacuation profilées inférieures (29) dans le noyau qui communique (nt) avec les gouttières profilées inférieures supplémentaires (18, 25, 33).

6. Serre (1) selon l'une quelconque des revendications précédentes, dans laquelle le premier profilé latéral (10) présente une gouttière étant une première gouttière à profilé latéral (22, 26, 35) dans laquelle le noyau (15) est pourvu d'une ouverture d'évacuation étant une première ouverture d'évacuation à profilé latéral (29) qui communique avec la première gouttière à profilé latéral (22, 26, 35).

7. Serre (1) selon la revendication 6 et les revendications 4 ou 5, dans laquelle la ou les ouvertures d'évacuation à profilé inférieur et la première ouverture d'évacuation à profilé latéral forment une ouverture d'évacuation commune (29).

8. Serre (1) selon l'une quelconque des revendications précédentes, dans laquelle au moins l'une parmi la première partie (16) et la seconde partie (17a, 17b) s'insère à l'intérieur du profilé inférieur (8) et du premier profilé latéral (10), respectivement.

9. Serre (1) selon l'une quelconque des revendications précédentes, dans laquelle la gouttière est formée par un noyau creux (18, 22) de l'au moins un parmi le profilé inférieur (8) et le premier profilé latéral (10).

10. Serre (1) selon l'une quelconque des revendications précédentes, dans laquelle le raccord d'angle (14) est une seule unité qui est en aluminium, de préférence réalisée au moyen d'un moulage.

11. Serre (1) selon l'une quelconque des revendications précédentes et la revendication 4, dans laquelle le premier profilé latéral (10) présente une surface de support (25) qui supporte le couvercle transparent (13) et le noyau (15) présente une partie de surface supérieure (27) qui est adjacente et affleurante avec ou juste en dessous des surfaces de support (25, 26) du profilé inférieur (8) et du premier profilé latéral (10), respectivement.

12. Serre (1) selon l'une quelconque des revendications précédentes, dans laquelle le profilé inférieur (8) et le premier profilé latéral (10) sont pourvus respectivement d'une bande de serrage de profilé inférieur flexible (32) et d'une bande de serrage de premier profilé latéral flexible (34), qui recouvrent des parties de bord respectives du couvercle transparent (13), dans laquelle les bandes de serrage (32, 34) sont inclinées vers le haut par rapport au plan du couvercle transparent (13) dans la direction extérieure du couvercle transparent (13), dans laquelle la largeur de la bande de serrage de profilé inférieur (32) est telle qu'elle chevauche légèrement le premier profilé latéral (10), dans laquelle une partie d'extrémité de la première bande de serrage de profilé latéral (34) chevauche une partie de la bande de serrage de profilé inférieur (32), dans laquelle le noyau (15) est pourvu d'une patte orientée vers le haut (38) pour plier vers le haut un angle de la bande de serrage de profilé inférieur (32) où elle est chevauchée par la partie d'extrémité de la première bande de serrage de profilé latéral (34).
